# EUROPEAN PATENT APPLICATION

(11) **EP 1 220 168 A2**
(43) Date of publication of application: **03.07.2002**
(21) Application number: 01130353.4
(22) Date of filing: 19.12.2001
(51) Int. Cl.: G07D 11/00, G07F 19/00

(54) **Automated teller machine and centralized managing system**

(30) Priority: 25.12.2000 JP 2000393095
(71) Applicant: Hitachi, Ltd., Chiyoda-ku, Tokyo 101-8010 (JP)
(72) Inventor: Kadowaki, Minoru, Hitachi, Ltd., Int. Propt. Group, Chiyoda-ku, Tokyo 100-8220 (JP); Okuna, Kenji, Hitachi, Ltd., Int. Propt. Group, Chiyoda-ku, Tokyo 100-8220 (JP); Matsuse, Hiroki, Hitachi, Ltd., Int. Propt. Group, Chiyoda-ku, Tokyo 100-8220 (JP)
(74) Representative: Strehl Schübel-Hopf & Partner

(57) **Abstract**

In an automated teller machine (1) having a function capable of discriminating paper currencies, the automated teller machine is operable in such a manner that a paper currency range which is to be handled by a main body of the own automated teller machine is made coincident with a paper currency range (furthermore, sort of paper currencies of paper currency storage safes, or cassettes) which may be handled by a paper currency deposit/withdraw mechanism (10) (paper currency discriminating unit (31)). Also, a centralized managing system can manage a plurality of the above-explained automated teller machines.

## Description

### BACKGROUND OF THE INVENTION

The present invention is related to an automated teller machine capable of handling currencies (paper currencies and metallic currencies). More specifically, the present invention is directed to both an automated teller machine and a centralized managing system for such automated teller machines capable of being utilized in a plurality of different countries. It should be understood that the inventive idea of the present invention may be, generally speaking, applied to various sorts of currencies containing paper currencies and metallic currencies. For the sake of simple explanations, the following descriptions are made, while "paper currencies" are exemplified.

In general, conventionally, automated teller machines have been used in financial institutes. More specifically, in automated teller machines used in Japan, these automated teller machines may support both currency deposit transactions for depositing paper currencies to users, and currency withdraw transactions for withdrawing paper currencies by users.

For instance, when paper currencies are exemplified in such an automated teller machine, in a currency withdraw transaction, plural sheets of paper currencies which are designated by a user are taken out from a paper currency storage unit contained in a paper currency deposit/withdraw mechanism mounted on this automated teller machine, and the taken paper currencies are discriminated from each other by a paper currency discriminating unit. Then, such paper currencies which are correctly discriminated are transported to a currency withdraw port so as to be ejected to the user. Also, in a currency deposit transaction, paper currencies which are entered into a paper currency deposit/withdraw mechanism by a user are taken out one by one to be transported to the paper currency discriminating unit. The paper currencies are discriminated from each other by this paper currency discriminating unit, and a money amount of the deposited paper currencies is displayed in accordance with the discrimination result and is confirmed by the user. After the money amount of the deposited currencies has been confirmed by the user, the automated teller machine may establish the currency deposit transaction.

However, as to automated teller machines used in overseas, such automated teller machines having currency deposit functions are not substantially used, but only such automated teller machines having currency withdraw functions are utilized. In the case of such an automated teller machine having only a currency withdraw function, a function capable of discriminating paper currencies is not necessarily employed in a paper currency deposit/withdraw mechanism. Thus, a money amount of paper currencies which are designated by a user may be merely taken out from a cassette in which a previously set money sort is grasped, and only necessary sheets of the taken paper currencies are simply transported to a currency deposit/withdraw port.

Such an automated teller machine is disclosed in, for example, JP-A-2-75551. This automated teller machine is arranged by a currency deposit/withdraw port for ejecting paper currencies to a user, a plurality of paper currency cassettes for storing thereinto paper currencies in accordance with a money sort thereof, a reject cassette for storing thereinto a rejected paper currency, and also a transport path for coupling these structural units to each other. This automated teller machine employs such a system that paper currencies taken out from the cassettes are directly transported to the currency deposit/withdraw port so as to be withdrawn.

The paper currency deposit/withdraw mechanism employing the above-explained system is basically equipped with no such a function capable of discriminating the paper currencies from each other. Since the money sort of paper currencies which are withdrawn is exclusively determined based upon the money sort of paper currencies set to the cassettes, an erroneous insertion preventing function is provided by which the cassettes are not inserted into the erroneous cassette positions (for example, cassette is provided with notch portion), so that the determined money sort of cassette may be inserted only into the determined cassette position.

### SUMMARY OF THE INVENTION

With respect to an automated teller machine having a currency withdraw function as a major function, which is used in overseas, in the case that such an automated teller machine additionally having a currency deposit function capable of discriminating/counting deposited paper currencies is tried to be realized, this automated teller machine is operated by previously determining paper currencies of which countries, or which regional areas in a similar manner to that of the machine equipped with only the currency withdraw function. Generally speaking, this reason is given as follows: That is, normally, automated teller machines which simultaneously handle paper currencies used in all of the world are not conceivable, but these automated teller machines may sufficiently handle such paper currencies which are limited only in a specific regional area (namely, countries and commonly currency-usable area).

Also, in order to realize such a currency deposit function capable of discriminating/counting paper currencies, a paper currency discrimination function is necessary required in a paper currency deposit/withdraw mechanism which is mounted or an automated teller machine. However, it is practically difficult that all of paper currencies used in all over the world can be discriminated from each other at the same time also in the function for discriminating the paper currencies. However, it is practically possible to discriminate paper currencies which are limited only to a certain regional area (countries and commonly currency-usable area), generally speaking, which may sufficiently satisfy the requirements of the normal automated teller machines.

Considering this item, in an automated teller machine having a function capable of discriminating paper currencies, a paper currency range which is handled by a main body (main body control unit) of this automated teller machine must be previously made coincident with a paper currency range which is handled by a paper currency deposit/withdraw mechanism. However, in automatic teller machines which have been conventionally used in Japan, paper currencies to be handled are basically limited to Japanese paper currencies, and further, both the automated teller machines and the paper currency deposit/withdraw mechanisms are manufactured to be exclusively operable in Japan. As a result, there is no such a conceptional idea capable of transmitting/receiving information as to the above-explained paper currency handling ranges (countries, regional areas, commonly current-usable area). Also, computer programs of these automated teller machines are formed to be exclusively used in Japan, so that such information related to the range capable of handling the paper currencies is not held therein.

If the paper currency range which is handled by the main body (main body control unit) of the automated teller machine is not made coincident with the paper currency range which can be discriminated by the paper currency deposit/withdraw mechanism, then there are some possibilities that the below-mentioned serious failures may occur. That is to say, all of the handled paper currencies are rejected, and/or the discriminated paper currencies are totalized as the paper currencies used in other countries. As a consequence, in such an automated teller machine having a function mainly capable of discriminating different sorts of paper currencies from each other in a plurality of regional areas, a paper currency range which is handled by a main body (main body control unit) of this automated teller machine must be made coincident with paper currencies which can be discriminated by a paper currency deposit/withdraw mechanism.

The present invention has been made to solve the abovexdescribed problems, and therefore, has an object to provide both an automated teller machine, and also, a centralized managing system for these automated teller machines. That is, in such an automated teller machine having a function capable of discriminating paper currencies from each other, the automated teller machine is operable in such a manner that a paper currency range which is to be handled by (main body control unit) the own automated teller machine is made coincident with a paper currency range (furthermore, sort of paper currencies of paper currency storage safes, or cassettes) which may be handled by a paper currency deposit/withdraw mechanism (paper discriminating unit).

To realize such an automated teller machine capable of handling paper currencies of plural regional areas in the overseas by changing a setting condition, while such information indicative of the range of the paper currencies which are handled by the main body of this automated teller machine can be set to the machine side (main body control unit), and also information indicative of the paper currency range which may be discriminated by the paper currency discriminating unit is additionally provided with the paper currency deposit/withdraw mechanism, the main body control unit checks both the information of the paper currency range which is handled by the automated teller machine and the discrimination range information owned by the paper currency deposit/withdraw mechanism when the operation of the automated teller machine is commenced until the automatic teller machine is entered to be operated.

As a result of this checking operation, when the paper currency range information is not made coincident with the discrimination range information, the automated teller machine is not brought into the operation mode, and the cassettes are replaced, or the paper currency range which is handled by the automated teller machine is changed, or the paper currency discriminating unit is changed so as to change the paper currency discriminatable range. As a consequence, while the automated teller machine is combined with the paper currency handling range of the paper currency deposit/withdraw mechanism mounted on this machine, the resultant automated teller machine can be operated without any problem. It should be understood that "currency handling mechanism" defined in the scope of claims for a patent corresponds to a paper currency deposit/withdraw mechanism of an embodiment.

### BRIEF DESCRIPTION OF THE DRAWINGS

For a better understanding of the present invention, reference is made of a detailed description to be read in conjunction with the accompanying drawings, in which:
Fig. 1 is a perspective view for illustratively showing an outer view of an automated teller machine;
Fig. 2 is a control block diagram for indicating a control relationship of the automated teller machine;
Fig. 3 is a control block diagram for indicating a control relationship of a paper currency deposit/withdraw mechanism;
Fig. 4 is a side view for showing a construction of a mechanism unit of the paper currency deposit/withdraw mechanism;
Fig. 5 is a diagram for illustratively representing a method for setting information (operation information) related to operations of the automated teller machine;
Fig. 6 is a diagram for illustratively showing cassette information saved in a storage apparatus of cassettes mounted on the paper currency deposit/withdraw mechanism;
Fig. 7 is a diagram for illustratively showing flows of information occurred among a main body control unit, the paper currency deposit/withdraw mechanism, and the storage apparatus of the paper currency cassettes employed in the automated teller machine;
Fig. 8 is a flow chart for describing one example of concrete operations of a method for communicating/checking the information;
Fig. 9 is a flow chart for describing a process operation of the automated teller machine when a paper currency cassette is again set;
Fig. 10 represents an example of a correspondence table between country sort information and currency sort information; and
Figs. 11A and 11B are explanatory diagrams for explaining one realizing example of a centralized managing system for the automated teller machines, according to the present invention.

### DESCRIPTION OF THE EMBODIMENTS

In an automated teller machine capable of discriminating/handling paper currencies which are used in plural different countries and regional areas, if a range of paper currencies which are intended to be handled by this automated teller machine is not made coincident with a range of paper currencies which may be handled by a paper currency deposit/withdraw mechanism (namely, paper currency discriminating unit), then problems will occur, for example, paper currencies are rejected many times, and a sum (total money amount) of paper currencies cannot be calculated under normal condition. As a consequence, before the operation of the automated teller machine is commenced, the range of the paper currencies which are intended to be handled by this automated teller machine (namely, main body control unit) must be made coincident with the range of the paper currencies which may be handled by the paper currency deposit/withdraw mechanism (paper currency discriminating unit).

To this end, in accordance with the present invention, while such an information indicative of the range of the paper currencies which are intended to be handled is saved in the main body (main body control unit) of the automated teller machine, and further, such an information representative of the range capable of discriminating the paper currencies by the paper currency discriminating unit is saved in the paper currency deposit/withdraw mechanism, both the above-explained information may be commonly used by both the main body (main body control unit) of the automated teller machine and the paper currency deposit/withdraw mechanism. Then, when the automated teller machine is operated, the main body control unit judges as to whether or not the paper currency discrimination operation can be carried out by checking both the saved range information. When the paper currency discrimination operation can be done, the automated teller machine is started to be operated. To the contrary, when the paper currency discrimination operation cannot be done, setting of the information is changed so as to activate the paper currency discrimination operation. Thereafter, this automated teller machine is started to be operated.

Referring now to drawings, an automated teller machine according to an embodiment of the present invention will be described in detail.

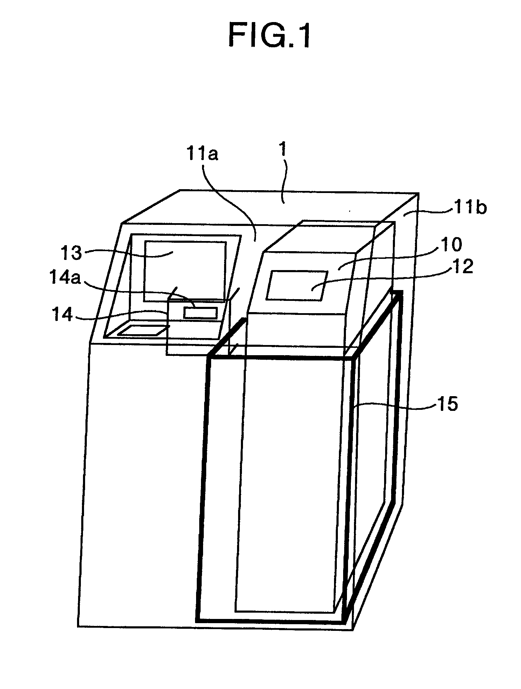

Fig. 1 is a perspective view for indicating an outer view of an automated teller machine 1, to which the present invention is applied. A card/description slip processing mechanism 14 and a customer operation unit 13 are provided inside of a left portion of the automated teller machine 1. The card/description slip processing mechanism 14 is communicated to a card slot 14a formed in a front-side plate 11a of an upper portion of the automated teller machine 1. This card/description slip processing mechanism 14 processes a card of a user so as to print out a transaction description slip and eject this printed transaction description slip. The customer operation unit 13 displays thereon a content of a transaction, and enters a content of a transaction. Also, a paper currency deposit/withdraw mechanism 10 is provided inside a right portion of the automated teller machine 1, and may process paper currencies. Another slot 12 is formed in the front-side plate 11a of the upper portion which is inclined. This slot 12 is employed so as to put in / take out a paper currency. Also, a paper currency storage unit of a lower portion of the paper currency deposit/withdraw mechanism 10 is surrounded by a safe (cash box) housing 15. The safe housing 15 is constituted by employing an iron plate which is different from an apparatus housing 11b. This apparatus housing 11b surrounds an entire portion of the automated teller machine 1. While this apparatus housing 11b itself is made of a rigid construction, the safe housing 15 is made of a more rigid construction for the sake of crime prevention. This automated teller machine 1 may execute various process operations, for instance, a money deposition, a payment, and a remittance by a user, while a card, a paper currency, a description slip, and the like are used as media.

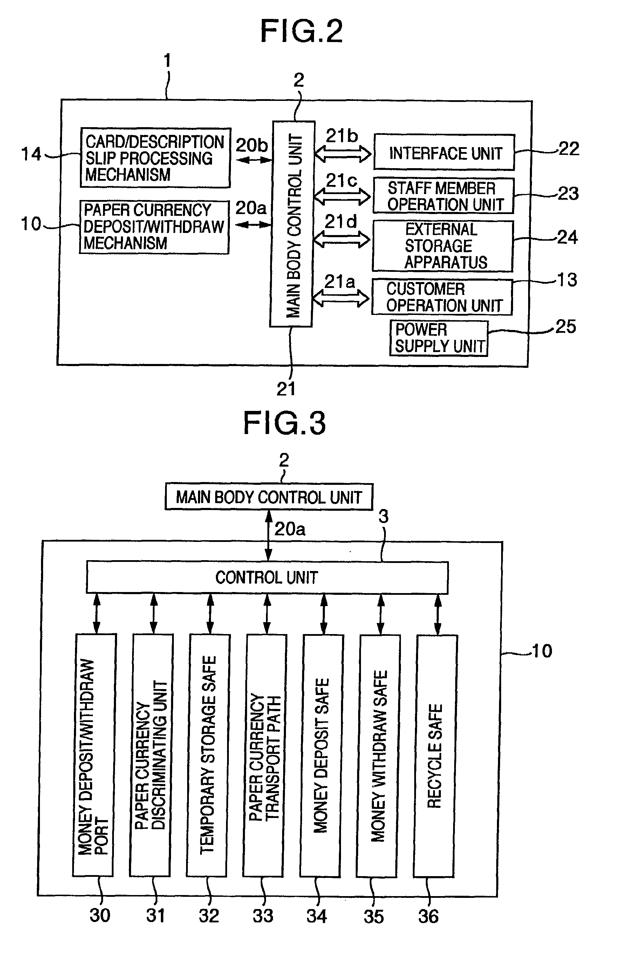

Fig. 2 is a control block diagram for indicating a control relationship of this automated teller machine 1. As previously described, both the paper currency deposit/withdraw mechanism 10 and the card/description slip processing mechanism 14, which are stored in the automated teller machine 1, are connected via a line 20a and another line 20b to the main body control unit 2, respectively. Also, the customer operation unit 13 is connected via a bus 21a to the main body control unit 2. Thus, these mechanism 10 and 14, and unit 13 execute the necessary operations under control of the main body control unit 2. This main body control unit 2 is also connected via buses 21b, 21c, and 21d to an interface unit 22, a staff member operation unit 23, and an external storage apparatus 24 in addition to the above-explained mechanism units 10/14 and structural unit 13 so as to transmit/receive necessary data. It should also be noted that reference numeral 25 shown in Fig. 2 indicates a power supply unit for supplying electric power to the respective mechanism units and structural units.

Fig. 3 is a control block diagram for indicating a control relationship of the paper currency deposit/withdraw mechanism 10 within the automated teller machine 1 shown in Fig. 1. A control unit 3 of the paper currency deposit/withdraw mechanism 10 is connected to the line 20a to the main body control unit 2. This control unit 3 may control the paper currency deposit/withdraw mechanism 10 in response to either an instruction issued from the main body control unit 2 or a state detection of the paper currency deposit/withdraw mechanism 10. Also, this control unit 30 transmits an operation condition of the paper currency deposit/withdraw mechanism 10 to the main body control unit 2, if necessary. Within the paper currency deposit/withdraw mechanism 10, while the control unit 31 is connected to drive motors, electromagnetic solenoids, and sensors (which are not shown in this drawing) of the respective units, this control unit 3 may drive/control actuators in response to various sorts of transactions by monitoring conditions by using the sensors. These units correspond to a currency deposit/withdraw port 30, a paper currency discriminating unit 31, a temporary storage safe 32, a paper currency transport path 33, a money deposit safe 34, a memory withdraw safe 35, and a money recycle safe 36.

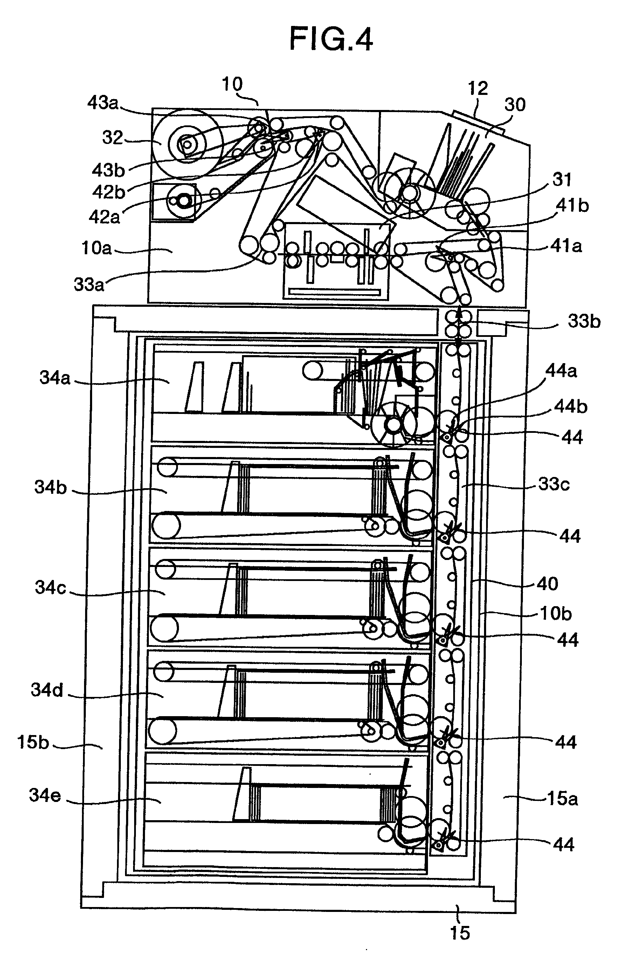

Fig. 4 is a side view for indicating a construction of a mechanism unit of the paper currency deposit/withdraw mechanism 10. The paper current deposit/withdraw mechanism 10 is mainly constituted by the money deposit/withdraw port 30, the paper currency discriminating unit 31, the temporary storage safe 32, paper currency cassettes 34a to 34e, the paper currency transport paths 33 (33a to 33c), and the control unit 3. The money deposit/withdraw port 30 is used through which a user puts/takes a paper currency and the like into/out from the paper currency deposit/withdraw mechanism 10. The paper currency discriminating unit 31 may discriminate paper currencies from each other. The temporary storage safe 32 temporarily stores thereinto a deposited paper currency until a transaction can be established. The paper currency cassettes 34a to 34e are detachable cassettes. The paper currency transport path 33 is used to transport paper currencies through the paper currency discriminating unit 31 with respect to these paper currency cassettes 34a to 34e. It should be understood that the control unit 3 of Fig. 3 is omitted in Fig. 4.

For example, in this drawing, the following cassette arrangement may be conceived. That is, the paper currency cassette 34a is assumed as a money deposit safe (corresponding to reference numeral 34 of Fig. 3) for storing therein a paper currency when a money deposit transaction can be established; the paper currency cassettes 34b to 34d are assumed as three sets of money recycle safes (corresponding to reference numeral 36 of Fig. 3) for storing thereinto paper currencies which are deposited and withdrawn; and also, the paper currency cassette 34e is assumed as a money withdraw safe (corresponding to reference numeral 35 of Fig. 3) for storing thereinto paper currencies which are withdrawn. It should also be noted that the structural arrangement of these paper currency cassettes may be changed, for example, the money withdraw safe 34e located at the lowermost stage may be used as a money recycle safe.

In Fig. 4, the paper currency deposit/withdraw mechanism 10 is arranged by an upper transport mechanism 10a and a lower paper currency mechanism 10b. The upper transport mechanism 10a is constituted by the money deposit/withdraw port 30, the paper currency discriminating unit 31, the temporary storage safe 32, and the paper currency transport path 33a. The lower paper currency mechanism 10b is constituted by the money deposit safe 34a, the recycle safes 34b to 34d, the money withdraw safe 34e, and transport paths 40. These transport paths 40 are arranged on the front surfaces of the respective storage safes, and may be opened and closed.

Furthermore, the lower paper currency mechanism 10b is packaged in a safe housing 15 made of a thick iron plate having a thickness of approximately 50 mm in this case. The transport path of the upper transport mechanism 10a is connected to the transport path of the lower paper currency mechanism 10b by employing a coupling transport path 33b. It should also be noted that the lower paper currency mechanism 10b may be constituted by employing such a mechanism which is not surrounded by a safe housing. In this alternative case, the upper transport mechanism 10a may be directly mounted on the lower paper currency mechanism 10b.

Also, the paper currency transport path 33 (33a to 33c) corresponds to such a bidirectional transport path. This bidirectional transport path may transport the paper currency discriminating unit 31 in the bidirectional manner, and mutually connects the money deposit/withdraw port 30, the temporary storage safe 32, the money deposit safe 34a, the recycle safes 34b to 34d, and the money withdraw safe 34e with each other. Then, the bidirectional transport path may transport the paper currency discriminating unit 31 along any one of positive/negative directions by switching the transport directions every time the transaction operation is carried out. The paper currency transport path 33a of the upper transport mechanism 10a, the paper currency transport path 33c of the lower paper currency mechanism 10b, and the coupling transport path 33b are driven by a drive source (motor, not shown in detail). The rotation direction of the motor is switched every time the transaction is carried out so as to switch the paper currency transport directions.

Furthermore, switching gates 41 to 43, and 5 places of switching gates 44 are present on branch points of the paper currency transport path 33 (33a to 33c). Every time the transaction is carried out, the paper currency transport directions are switched as indicated by symbols "a" and "b" by way of the switching gates.

Since the automated teller machine 1 is arranged by employing the paper currency deposit/withdraw mechanism 10 having the above-explained arrangement, this automated teller machine 1 may realize both a money withdraw transaction and a money deposit transaction. In the money withdraw transaction, the number of paper currency, which is designated by a user, may be withdrawn. In the money deposit transaction, a total number of paper currencies which are deposited by a user is counted, and the deposited paper currencies are stored.

Next, a description will now be made of various operations with respect to both a money deposit transaction and a money withdraw transaction.

### (1). First, operations executed when a money deposit transaction is carried out will be explained.

When the money deposit operation is carried out, paper currencies which are put into the money deposit/withdraw port 30 are separated one by one, and then, these separated paper currencies are transported up to the paper currency discriminating unit 31. The paper currency discriminating unit 31 discriminates a money sort of the transported paper currency, and also judges as to whether the transported paper currency is a genuine paper currency, or a forged paper currency. The paper currency which is discriminated by this paper currency discriminating unit 31 is once stored into the temporary storage safe 32 by switching the switch gate 42 to the switch gate side 42a. On the other hand, a paper currency which cannot be discriminated by the paper currency discriminating unit 31; another paper currency which is inclined; and such paper currencies whose intervals are abnormal (for example, overlapped paper currencies) are judged as paper currencies which should be rejected (will be referred to as "rejected paper currencies" hereinafter). The rejected paper currencies are not captured into the temporary storage safe 32, but are returned to the money deposit/withdraw port 30 so as to be saved thereinto. The rejected paper currencies which have been returned to the money deposit/withdraw port 30 so as to be saved thereinto are returned to the user.

When a transaction is established, the paper currencies which have been stored in the temporary storage safe 32 are sent out in a sequential order opposite to the sequential order when the paper currencies are stored along a direction opposite to that of the temporary storage operation, and then pass through the paper currency discriminating unit 31. Then, the paper currencies which have passed through this paper currency discriminating unit 31 are transported via the coupling transport path 33b to the paper transport path 33c, while the switching gate 41 is switched to the switching gate direction 41b as shown in this drawing. Since any of switching gates 44 of the money deposit safe 34a and the money recycle safes 34b to 34d are switched to switching gate direction 44b as indicated in this drawing in the paper currency transport path 33c, the transported paper currencies are stored into the designated storage safes. As a result, the money deposit operation may be accomplished.

### (2). Next, a description is made of operations executed during money withdraw transaction.

In the money withdraw process operation, first, a predetermined number of paper currencies are derived from the respective safes of the money withdraw safe 34e and the money recycle safes 34b to 34d with respect to each of money sorts (corresponding switching gates 44 are switched to switching gate sides 44b in this case), and then, are transported to the paper currency discriminating unit 31. In the paper currency discriminating unit 31, a money sort of the transported paper currency is discriminated. After the money sort of the transported paper currency has been discriminated, the switching gate 42 is switched along the switching gate direction of 42b in such a manner that the paper current is stored into the side of the money deposit/withdraw port. As a result, the paper currency which has passed through the paper currency discriminating unit 31 is stored into the money deposit/withdraw port 30. Thereafter, a shutter of an upper surface of the slot 12 is opened in order that the user may pick up the paper currency. When the user receives the paper currency stored in the storage unit, the money withdrawing process operation is accomplished.

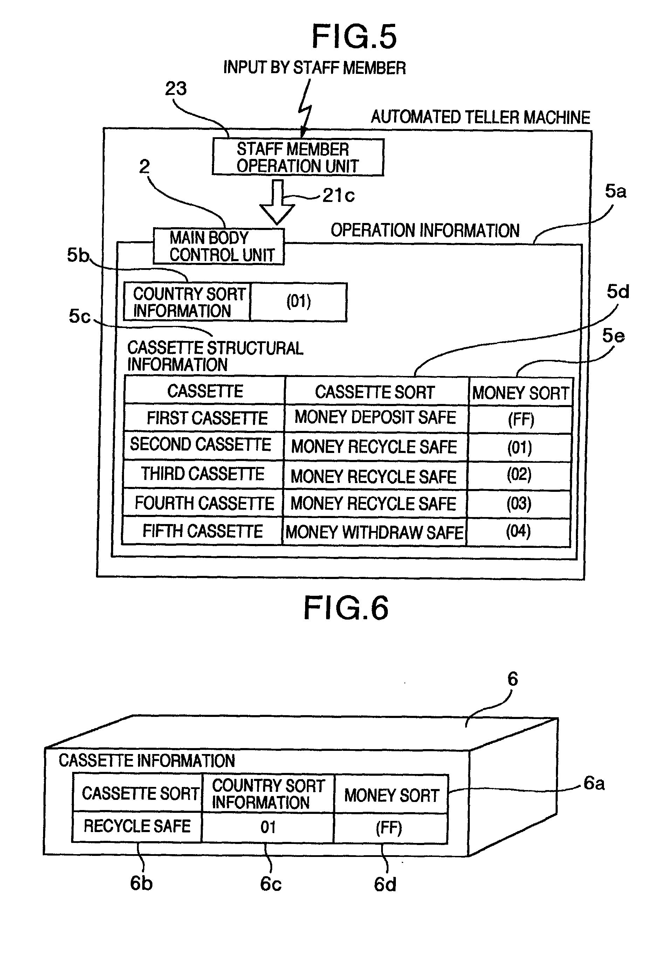

Next, a description will now be made of a method for handling information related to paper currencies which may be handled by the automated teller machine with reference to Fig. 5 to Fig. 10. The automated teller machine, as explained in this embodiment, is provided with a change means for changing paper currencies to be handled, and further, is equipped with a setting means for setting a handling range of these paper currencies, depending upon a regional area where this automated teller machine is operated. As a result, the automated teller machine owns such operation information for indicating how this automated teller machine is operable under condition before the operation of this machine is commenced, the operation information is set by a staff member and the like.

Fig. 5 is a diagram for indicating an example of a method for setting information (namely, operation information) related to the operations of the automated teller machine.

First of all, before the operation of the automated teller machine 1 is commenced, a staff member, or the like enters such an information related to the operation of the automated teller machine by employing the safe member operation unit 23. The entered information related to the operation is transferred via the bus 21c to the main body control unit 2, and then, is stored as operation information 5a into the storage unit provided within the main body control unit 2. Also, this operation information is transferred via the bus 21d to the external storage apparatus 24 shown in Fig. 2 so as to be stored thereinto as non-volatile information. This operation information 5a is constituted by country sort information 5b (for example, Japan, USA, China etc.) and cassette structural information 5c. The country sort information 5b indicates that this automated teller machine 1 should handle paper currencies of which country. The cassette structural information 5c is to instruct how the paper currency cassettes are constructed. It should also be noted that this country sort information 5b may involve a regional area which may cover different plural countries, for example, the North America, the European area, and the Asian area.

First, a description will now be made of a concrete example of the cassette structural information 5c which is stored in the automated teller machine 1.

As previously explained, the paper currency deposit/withdraw mechanism 10 shown in Fig. 4 is constituted by a plurality of paper currency cassettes, and these paper currency cassettes may be set by selecting the money deposit safe, the money withdraw safe, and the money recycle safe, respectively. As a result, as to each of the first to fifth cassettes, the automated teller machine 1 may set that what sort of cassette is used as the cassette sort 5d, and may store thereinto this cassette sort 5d. In the example of Fig. 5, the first cassette is set to the money deposit safe for storing thereinto such paper currencies which are exclusively used to be deposited; the second cassette to the fourth cassette are set to the money recycle safes for storing thereinto such paper currencies which are used to be deposited and withdrawn; and also the fifth cassette is set to the money withdraw safe for storing thereinto such paper currencies which are exclusively used to be withdrawn.

Furthermore, when the automated teller machine 1 sets that the respective cassettes handle what sort of paper currencies, for example, cassettes handle US dollar paper currencies based on the country sort information 5b, such money sort information 5e is set and stored by which what US dollar paper currencies are stored into the cassettes. While the money sort information as to the country sort information is previously set as a correspondence table, if necessary information is selected from the money sort information set to the country sort information, then operability of this automated teller machine 1 may be improved.

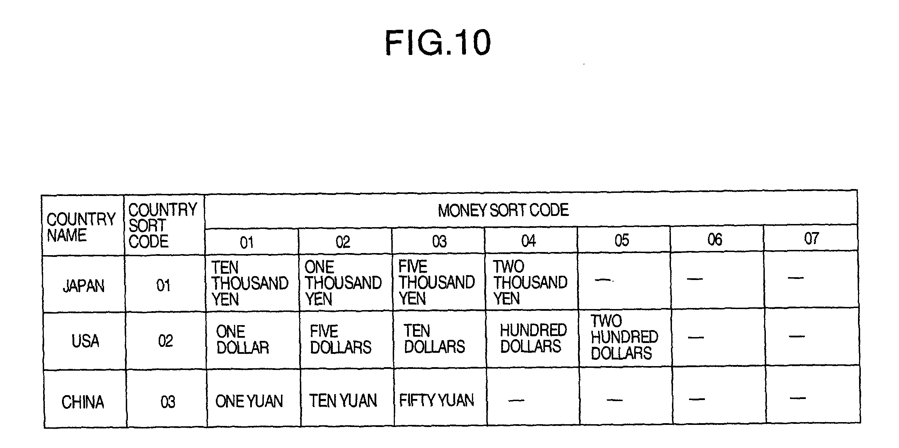

Fig. 10 is a diagram for indicating an example of a correspondence table with respect to both the country sort information 5b and the money sort information 5e. In this example of Fig. 10, both the country sort information 5b and the money sort information 5e are processed to be coded, the codes of the country sort information 5b indicate such a case that Japan corresponds to a code of "01", USA corresponds to a code of "02", and China corresponds to a code of "03."

Also, codes of the money sort information are set with respect to each of the country sort information. In the example of Fig. 10, in such a case that the country sort information corresponds to Japan (namely, code of "01"), ten thousand yen corresponds to a code of "01"; one thousand yen corresponds to a code of "02"; five thousand yen corresponds to a code of "03"; and also two thousand yen corresponds to a code of "04." In the case that the country sort information corresponds to USA (namely, code of "02"), one dollar corresponds to a code of "01"; five dollars correspond to a code of "02"; ten dollars correspond to a code of "03"; and one hundred dollars correspond to a code of "04." In the case that the country sort information corresponds to China (namely, code of "03"), one yuan corresponds to a code of "01"; ten yuan corresponds to a code of "02"; and fifty yuan corresponds to a code of "03."

The example of Fig. 5 represents the following case with employment of the correspondence table of Fig. 10. That is, while the country sort information 5b is Japan (namely, code of "01"), the first cassette is set to the money deposit safe and a money sort code to be stored in this money deposit safe is set as "FF"; and the second cassette is set to the money recycle safe and a money sort code to be stored in this money recycle safe is set as "01 (ten thousand yen)" among the cassette structural information 5c. Also, the third cassette is set to the money recycle safe, and a money sort code to be stored in this money recycle safe is set as "02 (one thousand yen)"; the fourth cassette is set to the money recycle safe, and a money sort code to be stored in this money recycle safe is set as "03 (five thousand yen)"; and also the fifth cassette is set to the money withdraw safe, and a money sort code to be stored in this money recycle safe is set as "04 (two thousand yen)".

It should be noted that while "FF" is set as the money sort information to the first cassette in this example, this "FF" implies that all of the money sorts are accepted, and also implies that all of the paper currencies of such money sorts which are not stored in the money recycle safes are stored into the money deposit safe corresponding to the first cassette. Alternatively, in the case that the above-explained correspondence table is not employed, another method capable of representing the countries and the money sorts by way of other means such as the country sort codes and the text code defined by ISO may be employed. Although both the country sort information and the money sort information have been described as separate information, when an attention is paid to the money sort, the money sorts of the paper currencies issued from the respective countries are different from each other. As a result, while the country sort information is not provided, codes are allocated to the respective money sorts of the respective countries, so that a similar function as the above-explained function may be achieved.

Also, in the above-explained description, the setting means operated in such a manner that the operation information 5b is entered from the staff member operation unit 23 to be set is represented. Alternatively, it is apparently possible to previously store the operation information 5b into the control program of the automated teller machine 1.

On the other hand, while the respective cassettes 34a to 34e which are set to the paper currency deposit/withdraw mechanism 10 contain storage units such as memory ICs (not shown in detail), information related to these cassettes may be saved in these storage units. Fig. 6 is a diagram for indicating one example of cassette information 6a saved in this storage unit in the case that the cassettes 34a to 34e mounted on the paper currency deposit/withdraw mechanism 10 are assumed as one cassette 6. In this example, as this cassette information 6a, a cassette sort 6b, country sort information 6c, and money sort information 6d are stored. This cassette sort 6b indicates that the own cassette corresponds to which type of cassette (namely, money deposit safe, money recycle safe, or money withdraw safe). As a means for setting the cassette information 6a to the cassette 6, a specific writing jig apparatus may be employed. Alternatively, while such a setting means is mounted on the paper currency deposit/withdraw mechanism 10, this setting means may request the main body control unit 2 to issue a writing command so as to set the cassette information 6a.

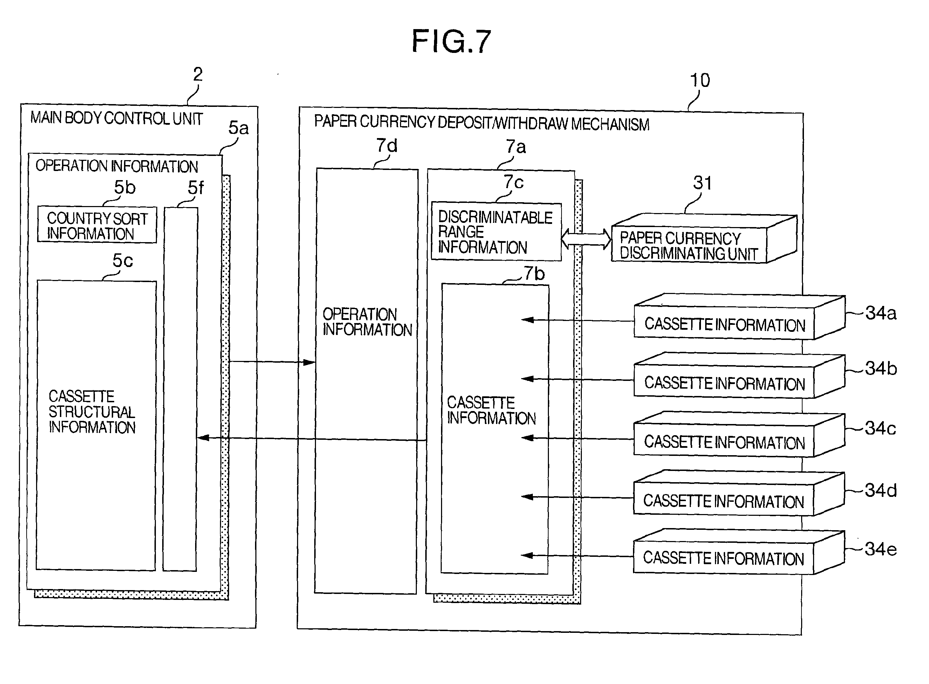

Fig. 7 is a diagram for illustratively representing a flow of information among the main body control unit 2, the paper currency deposit/withdraw mechanism 10, and the storage units of the paper currency cassettes 34a to 34e.

The operation information 5a stored in the main body control unit 2 of Fig. 5 is transmitted to the paper currency deposit/withdraw mechanism 10, and then, is stored as operation information 7d into the control unit 3 of Fig. 3. The cassette information stored in the storage units of the cassettes 34a to 34e mounted on the paper currency deposit/withdraw mechanism 10 is taken into the paper currency deposit/withdraw mechanism 10, or is acquired by an acquisition means so as to be stored as cassette information 7b.

Furthermore, such information stored in the storage unit of the paper currency discriminating unit 31 is taken into the paper currency deposit/withdraw mechanism 110 so as to be stored as discriminatable range information 7c (also, will be simply referred to as "discrimination information "). This information indicates currencies and a range of money sorts, which can be discriminated by this paper currency discriminating unit 31. Alternatively, this information may be previously stored when the automated teller machine 1 is designed, or may be read out from the external storage apparatus 24. Then, the paper currency deposit/withdraw mechanism 10 saves both the discriminatable range information 7c taken from the paper currency discriminating unit 31 and the cassette information 7b taken from the cassettes as internal information 7a respectively. Also, this paper currency deposit/withdraw mechanism 10 sends this internal information 7a to the control unit 2 of the main body, and the sent internal information 7a is also stored on the side of the main body as internal information 5f of the paper currency deposit/withdraw mechanism 10.

As a consequence, both the main body control unit 1 and the paper currency deposit/withdraw mechanism 10 can commonly use the operation information 5a, the cassette information 7b, and the discriminatable range information 7c. Both the main body control unit 2 and the paper currency deposit/withdraw mechanism 10 mutually check all of the above-described information before the operation is commenced, and checks as to whether or not the automated teller machine 1 can be brought into the operation state.

For example, the main body control unit 2 checks both the country sort information 5b for indicating that the paper currencies belonging to which country are handled, and also the discriminatable range information 7c taken from the paper currency discriminating unit 31, and checks as to whether or not the paper currencies of the country to be handled can be discriminated by the paper currency discriminating unit 31. Furthermore, this main body control unit 2 checks both the cassette structural information 5c to be operated, and the cassette information 7b taken from the cassette mounted on the paper currency deposit/withdraw mechanism 10. Also, the main body control unit 2 checks as to whether or not a money sort to be operated is equal to a money sort of the set cassette, and also checks as to whether or not the money deposit safe, the money withdraw safe, and also the money recycle safe are mounted in the correct manner. As a consequence, even in such an automated teller machine equipped with such a construction capable of handling a plurality of money sorts, and furthermore, capable of mounting a plurality of cassettes, this automated teller machine can be operated without any problem.

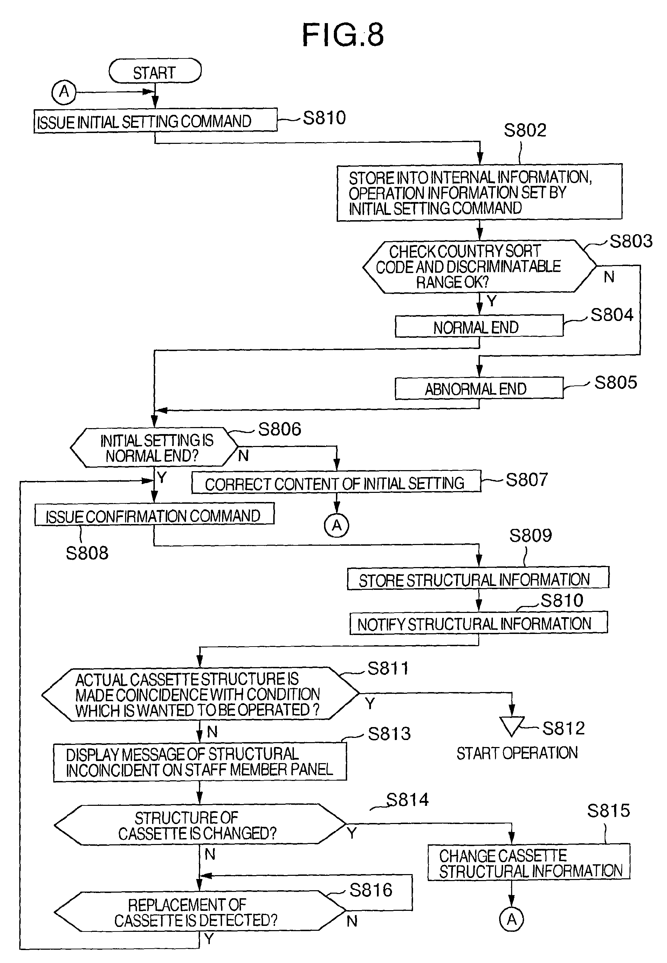

Next, an example of concrete operations as to a method for transmitting/receiving the respective information and another method for checking the respective information by using Fig. 7 will now be described with reference to a flow chart shown in Fig. 8. In this case, it is so assumed that the information which should be set to the automated teller machine 1 has already been set by executing the staff member process operation, or has previously set to a program.

When the power supply of the automated teller machine 1 is turned ON, the main body control unit 2 of the automated teller machine 1 issues an initial setting command with respect to the paper currency deposit/withdraw mechanism 10 (step S801). In this case, the operation information 5a which has previously set to the main body control unit 2 of the automated teller machine 1 is transmitted to the paper currency deposit/withdraw mechanism 10. The paper currency deposit/withdraw mechanism 10 stores the information transmitted in this initial setting operation into "7d" (step S802). As a result, the paper currency deposit/withdraw mechanism 10 can discriminate paper currencies from each other based upon this country sort information, and also can know that this paper currency deposit/withdraw mechanism 10 should be operated based upon which cassette structural information.

Next, the control unit 3 (see Fig. 3) of the paper deposit/withdraw mechanism 10 compares the country sort information set from the main body control unit 2 with the discriminatable range of the paper currency deposit/withdraw mechanism 10 in order to check as to whether or not the automated teller machine 1 can be operated (step S803). When the automated teller machine 1 cannot be operated (NO: at step S803), the control unit 3 notifies an abnormal side (step S805), and brings the automated teller machine 1 not into the operation state (NO: at step S806), and also corrects the content of the initial setting operation (step S807).

When the automated teller machine 1 can be operated (YES: at step S803), the control unit 3 notifies the normal end (step S804), and brings the automated teller machine 1 into the operation state (YES: at step S806). Next, the main body control unit 2 of the automated teller machine 1 issues a confirmation command (step S808), and takes up the conditions of the paper currency deposit/withdraw mechanism 10. This confirmation command is used to confirm both a cassette condition and a discrimination condition of the paper currency deposit/withdraw mechanism 10.

Then, the control unit 3 of the paper currency deposit/withdraw mechanism 10 takes up the cassette information 34a to 34e from the respective cassettes, and sets the taken cassette information 34a to 34e as the cassette information 7b into the internal information 7a (step S809), and further, notifies this cassette information 7b to the main body control unit 2 of the automated teller machine 1 (step S810).

The main body control unit 2 of the automated teller machine 1 checks this information and confirms as to whether or not the setting condition to be operated by the own automated teller machine 1 can be made coincident with the structure of the cassettes (step S811).

In the case that the setting condition to be operated by the own automated teller machine 1 is made coincident with the structure of the cassettes, this automated teller machine 1 is directly brought into the operation state (YES: at step S811). To the contrary, in the case that the setting condition to be operated by the own automated teller machine 1 is not made coincident with the structure of the cassettes (NO: at step 811), the main body control unit 2 notifies this fact, for instance, displays such a message on the staff member operation unit 23 shown in Fig. 2 (step S813). Then, the main body control unit 2 prompts the staff member to correct the present cassette structure in such a manner that the present structure of the cassettes is changed so as to make up a correct cassette structure.

In such a case that setting of the cassettes involves an error, the staff member replaces these cassettes to correct the erroneous cassette structure. The man body control unit 2 continuously monitors the cassette replacement, or monitors the cassette replacement in a predetermined time interval (step S816). When the main body control unit 2 detects the replacement of these cassettes, this main body control unit 2 issues a confirmation command (step S808), and again takes up conditions of these cassettes so as to check the structure of the cassettes.

Also, in such a case that the structure of the cassettes is wanted to be changed (YES: at step S814), the changed structural information is entered from the staff member operation unit 23, and the main body control unit 2 corrects the cassette structural information 5c (step S815), and again issues the initial setting command, and also transfers the changed cassette structural information to the paper currency deposit/withdraw mechanism 10 (step S801).

Since the above-described operations are carried out, the main body control unit 2 of the automated teller machine 1 may commonly use both the conditions to be operated by the own automated teller machine 1 and the conditions of the paper currency deposit/withdraw mechanism 10, and further, may check these conditions in order that the conditions to be operated by the own automated teller machine 1 can be made coincident with the conditions of the paper currency deposit/withdraw mechanism 10. It should be noted that the main body control unit 2 basically executes the above-described judgment in the above-described example. Alternatively, the control unit 3 may perform the above-described judgment. Also, while the main body control unit 2 and the control unit 3 are separately provided, both the main body control unit 2 and the control unit 3 mutually check these conditions in the above-described example. Alternatively, when the command systems are united on the side of any one of these control units 12 and 3, this control unit may apparently check operations similar to those of the above-described operations. This idea may be similarly applied to the below-mentioned examples.

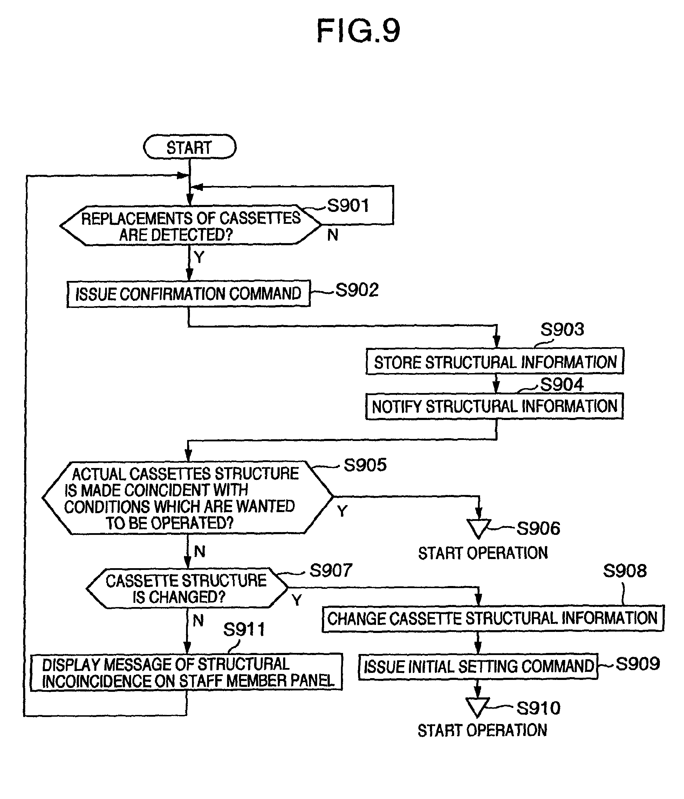

Next, a description will now be made of such a process operation executed in the case that a paper currency cassette set to the paper currency deposit/withdraw mechanism 10 is again set with reference to a process flow chart of Fig. 9.

In the case that a replacement of paper currency cassettes is detected (YES: at step S901), the main body control unit 2 of the automated teller machine 1 issues a confirmation command with respect to the paper currency deposit/withdraw mechanism 10 (step S902).

Upon receipt of the confirmation command, the paper currency deposit/withdraw mechanism 10 takes up, or acquires the cassette information 34a to 34e, and stores these acquired cassette information 34a to 34e as cassette information 7b into the paper currency deposit/withdraw mechanism 10 (step S903), and further, notifies this information with respect to the main body control unit 2 of the automated teller apparatus 1 (step S904). The main body control unit 2 of the automated teller machine 1 checks as to whether or not the structure of the cassettes which are operated by the own automated teller apparatus 1 is made coincident with the structure of the cassettes which are actually set (step S905).

As a result of this check operation, in the case that the structure of the cassettes which are operated by the own automated teller machine 1 is made coincident with the actual structure of the cassettes, the operation of this automated teller machine 1 is directly commenced (step S906). On the other hand, in the case that the structure of the cassettes which are operated by the own automated teller machine 1 is not made coincident with the actual structure of the cassettes, the main body control unit 2 of this automated teller machine 1 judges as to whether or not this automated teller machine 1 is operated by changing the cassette structure (step S907). When the automated teller machine 1 is operated by changing the cassette structure, the main body control unit 2 changes the mounted cassette structure into a cassette structure to be operated (step S908), and issues an initial setting command (step S909) so as to change the structural information which is stored in the paper currency deposit/withdraw mechanism 10, so that the automated teller machine 1 may be directly brought into the operation (step S910).

When the structure of the cassettes is not changed (NO: at step S907), the main body control unit 2 displays such a fact that the structures of the cassettes are not made coincident with each other on the staff member operation unit (step S911), and prompts the staff member to again set the cassettes. Then, the process operation is returned to the previous step S901 at which the main body control unit 2 waits that the cassettes are again set. In the case that the cassettes are again set (YES: at step S901), the abovei explained operations are repeatedly carried out. As a consequence, even when the structure of the cassettes are changed while the automated teller machine 1 is operated, the present invention may be realized.

Since the above-described operations are carried out, the information as to the paper currencies which should be handled by the automated teller machine, the information related to the paper currency range which can be discriminated by the paper currency deposit/withdraw mechanism, and also, the information about the cassettes are commonly used by both the main body (namely, among body control unit) of the automated teller apparatus and the paper currency deposit/withdraw mechanism. As a result, both the main body control unit of the automated teller machine and the paper currency deposit/withdraw mechanism can check all of the above-explained information, and furthermore, may confirm as to whether or not the paper currency cassettes mounted on the paper currency deposit/withdraw mechanism are suitably structured with respect to the operation of this automated teller machine. As a result, the automated teller machine can be operated by these control unit and paper currency deposit/withdraw mechanism.

While a plurality of automated teller machines 1 having the above-described structures are connected via a network to a center apparatus (namely, financial institute such as bank), a centralized managing system for automated teller machines may be arranged which acquires the operation information 5a and the internal information 7a of each of the automated teller machines 1, and also a total number of paper currencies which are set to each of the cassettes are acquired so as to be centralized-managed.

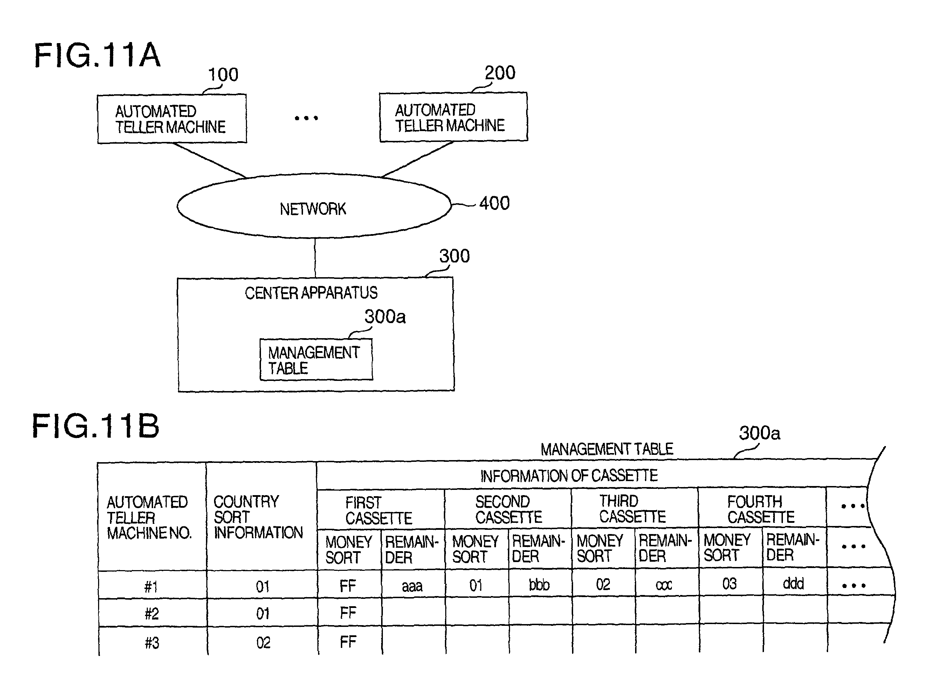

Fig. 11A is a diagram for explaining a realizing example of a centralized managing system of automated teller machines. In Fig. 11A, reference numerals 100 to 200 show automated teller machines installed at respective places, reference numeral 300 shows a center apparatus installed in a bank and the like, and reference numeral 400 indicates a network. The center apparatus 300 acquires information related to paper currency ranges which should be handled and stored by the automated teller machines installed in the respective places, and information as to currencies (money sort, money amount and the like) which are stored in the respective currency storage safes, and then centralized-manages the acquired information in a management table 300a. In the management table 300a, such information indicative of a range of currencies which can be handled and are held by a currency handling mechanism employed in an automated teller machine may be managed in addition to the above-described information. Fig. 11B indicates an example of information which is centralizedimanaged based upon the management table 300a of the center apparatus 300. In other words, when an attention is given to an automated teller machine No. 1 among the automated teller machines 100 to 200, while "01" is set as the country sort information to this automated teller machine No. 1, the cassettes of this machine No. 1 are managed as follows: A money sort of a first cassette of this machine No. 1 corresponds to "FF" and the remainder thereof corresponds to "aaa"; and also a money sort of a second cassette corresponds to "01" and the remainder thereof corresponds to "bbb." The features of the respective automated teller machines 100 to 200 are identical to the previously explained features, for instance, the judgment made by the comparison with the operation information. Therefore, explanations of these features are omitted.

In accordance with the above-described centralized managing system, the conditions of the automated teller machines which are installed in the respective countries, the respective regional areas, and also the respective places can be centralized-grasped at one place. Thus, this centralized managing system can grasp that the automatic teller machine installed at which place has stored what money sorts of paper currencies, and also, can grasp how many these paper currencies are stored. Further, the centralized managing system can grasp the operation conditions (namely, how many what sorts of paper currencies are used) with respect to each of the money sorts. As a consequence, this centralized managing system can readily and properly manage the distribution plan of the automated teller machines in future, the operation plan thereof in future, and the replenishment of paper currencies.

As previously described, in the above-explained embodiment, the process operations of the paper currencies have been explained. Alternatively, when a mechanism structure for handling metallic currencies is employed in addition to the above-describe paper currency deposit/withdraw mechanism 10, such a currency handling mechanism capable handling either paper currencies or metallic currencies, namely generic name of "currencies" may be realized. The mechanism structure corresponds to, for example, a metallic currency deposit/withdraw port, a metallic currency discriminating unit, a metallic currency cassette, a transport path for transporting metallic currencies.

As previously described in detail, in accordance with the present invention, in the automated teller machine which contains the paper currency deposit/withdraw mechanism and may discriminate the paper currencies belonging to the plural countries, or the plural regional areas to be handled, both the paper currencies which are handled by the main body (main body control unit) of the automated teller machine, and the paper currencies which may be handled by the paper currency deposit/withdraw mechanism can be confirmed so as to operate this automated teller machine. Furthermore, while the main body control unit can confirm as to whether or not the structure of the cassettes mounted on this automated teller machine is made coincident with the conditions of the cassettes which are operated in this machine, this automated teller machine can be operated. This operation may also be realized in the automated teller machine which is arranged by a plurality of cassettes and is capable of handling a plurality of money sorts.

It will be further understood by those skilled in the art that the foregoing description has been made on embodiments of the invention and that various changes and modifications may be made in the invention without departing from the spirit of the invention and scope of the appended claims.

## Claims

1. An automated teller machine (1) for performing a cash transaction, comprising:
a currency deposit/withdraw port (10) for depositing/withdrawing a currency;
a discriminating unit (31) for discriminating a currency;
a cassette detachably (5, 6) mounted with respect to said automated teller machine, for storing thereinto a currency; and
a control unit (2) for storing thereinto operation information used to operate said automated teller machine in correspondence with a money sort of the currency stored in said cassette which is set to said automated teller machine, and for performing a control operation based upon said stored operation information.

2. An automated teller machine as claimed in Claim 1 wherein:
said control unit sets, or changes said operation information stored in said control unit.

3. An automated teller machine as claimed in Claim 2 wherein:
said automated teller machine is further comprised of:
a staff member panel for display thereon, which is operated by a staff member; and
said control unit sets, or changes said operation information by using said staff member panel.

4. An automated teller machine as claimed in Claim 1 wherein:
said control unit acquires cassette information from said cassette which is set to said automated teller machine, and judges as to whether or not said acquired cassette information is suitable for said stored operation information.

5. An automated teller machine as claimed in Claim 4 wherein:
said control unit continuously performs the operation of said automated teller machine in the case that the judgment result is suitable for said operation information.

6. An automated teller machine as claimed in Claim 4 wherein:
in the case that the judgment result is not suitable for said operation information, said control unit notifies such a fact that said judgment result is not suitable for said operation information.

7. An automated teller machine as claimed in Claim 1 wherein:
said control unit acquires money sort information from cassette information set to said automated teller machine, and judges as to whether said money sort information of the acquired cassette information is made coincident, or not coincident with said money sort information of said previously stored operation information.

8. An automated teller machine as claimed in Claim 7 wherein:
said control unit operates said automated teller apparatus based upon said money sort information of the operation information when it is so judged that said money sort information of said acquired cassette information is made coincident with said money sort information of the previously stored operation information.

9. An automated teller machine as claimed in Claim 7 wherein:
said automated teller machine is further comprised of: a staff member panel for displaying thereon, which is operated by a staff member; and
when it is so judged that said money sort information of said acquired cassette information is not made coincident with said money sort information of the previously stored operation information, said control unit displays said a fact of "non-coincidence" on said staff member panel.

10. An automated teller machine as claimed in Claim 1 wherein:
said stored operation information contains sort information of said cassette, which indicates as to whether or not said cassette exclusively stores thereinto a currency deposited from said currency deposit/withdraw port, whether or not said cassette exclusively stores thereinto a currency withdrawn from said currency deposit/withdraw port, or whether or not said cassette stores thereinto currencies which are deposited and withdrawn from said currency deposit/withdraw port; and
said control unit acquires such information corresponding to said sort information of said cassette, which is contained in said stored operation information, from said cassette set into said automated teller machine, and also judges as to whether or not the operation is properly carried out based upon said acquired information.

11. An automated teller machine as claimed in Claim 1 wherein:
said stored operation information contains information related to a country which issues a currency; and
said control unit acquires such information corresponding to the country information of said stored operation information from said cassette set to said automated teller machine, and judges as to whether or not the operation is suitable based upon the acquired information.

12. An automated teller machine as claimed in Claim 1 wherein:
said stored operation information contains discrimination information indicative of a range of a currency which is discriminated by said discriminating unit; and
said control unit acquires such information related to a currency stored form said cassette which is set to said automated teller machine, and judges as to whether or not said currency information is located within a range of said discrimination information.

13. An automated teller machine as claimed in Claim 1 wherein:
said control unit continuously monitors, or monitors in a constant time interval the information related to said cassette set to said automated teller machine.

14. An automatic teller machine (1) equipped with a currency deposit/withdraw mechanism (10) for depositing/withdrawing a currency, comprising:
a main body control unit (2) for controlling said automatic teller machine; wherein:
said currency deposit/withdraw mechanism (10) includes a currency deposit/withdraw port for depositing/withdrawing the currency; a discriminating unit (31) for discriminating the currency deposited form said currency deposit/withdraw port; a temporary storage unit for temporarily storing the currency discriminated by said discriminating unit; a plurality of cassettes (5d) for storing thereinto the currencies in accordance with said discrimination result and also detachably mounted on said currency deposit/withdraw mechanism; and also a control unit for controlling said currency deposit/withdraw mechanism;
said control unit of said currency deposit/withdraw mechanism acquires cassette information from said cassettes set to said currency deposit/withdraw mechanism, and also transmits said acquired cassette information to said main body control unit; and
said main body control unit acquires said cassette information transmitted form said control unit, and also transmits operation information of said automated teller machine to said currency deposit/withdraw mechanism.

15. An automated teller machine as claimed in Claim 14 wherein:
either said main body control unit or said control unit of the currency deposit/withdraw mechanism continuously monitors, or monitors in a constant time interval mounting/dismounting of said cassettes which are set to said currency deposit/withdraw mechanism.

16. An automated teller machine as claimed in Claim 15 wherein:
in the case that either said main body control unit or said control unit of the currency deposit/withdraw mechanism monitors to sense that said cassettes are again reset, said main body control unit again acquires said cassette information transmitted from said control unit, and also judges as to whether or not said acquired cassette information is suitable for said stored operation information of the automated teller machine.

17. An automated teller machine as claimed in Claim 14 wherein:
said main body control unit acquires money sort information contained in said cassette information transmitted from said control unit, and also judges as to whether or not said acquired money sort information is suitable for said stored operation information.

18. An automated teller machine as claimed in claim 17 wherein:
in the case that said main body control unit judges that said acquired money sort information is suitable for said operation information, said main body control unit executes the operation of said automated teller machine based upon said operation information; and
in the case that said main body control unit judges that said acquired money sort information is not suitable for said operation information, said main body control unit notifies such a fact that said acquired memory sort information is not suitable for said operation information.

19. An automated teller machine as claimed in claim 14 wherein:
said control unit of said currency deposit/withdraw mechanism acquires said operation information stored in said main body control unit, and judges as to whether or not said acquired operation information is suitable for said cassette information.

20. A centralized managing system comprising a plurality of automated teller machines; and a center apparatus for connecting said plurality of automated teller machines via a network to each other, wherein:
said center apparatus acquires and manages both information indicative of a currency range which should be handled by each of said plural automated teller machines, and also information indicative of an amount of currencies which are stored in cassettes set to said plural automated teller machines.
